# EUROPÄISCHE PATENTSCHRIFT

(11) **EP 2 325 726 B1**
(45) Veröffentlichungstag und Bekanntmachung des Hinweises auf die Patenterteilung: **05.09.2018**
(21) Anmeldenummer: 10176591.5
(22) Anmeldetag: 14.09.2010
(51) Int. Cl.: G06F 3/03, B43K 23/08, H04R 1/18, B43K 19/00, B43K 29/02, B43K 23/00, B43K 25/00

(54) **System mit einem Stift zum Bedienen eines elektronischen Geräts und einer Aufbewahrungsvorrichtung sowie Verfahren zum Ausrichten eines Stifts**
System with a pen for operating an electronic device and storage device and method for aligning a pen
Système doté d'un crayon destiné à commander un appareil électronique et dispositif de stockage ainsi que procédé destiné à orienter un crayon

(30) Priorität: 21.10.2009 DE 102009050191
(43) Veröffentlichungstag der Anmeldung: 25.05.2011
(73) Patentinhaber: Fujitsu Technology Solutions Intellectual Property GmbH, 80807 München (DE)
(72) Erfinder: Maridakis, Michail, 86157, Augsburg (DE)
(74) Vertreter: Epping - Hermann - Fischer

(56) Entgegenhaltungen:
- WO-A1-00/72135
- US-A1- 2004 135 765
- US-A1- 2005 168 500
- US-A1- 2006 094 464
- US-A1- 2009 225 061

## Beschreibung

Die Erfindung betrifft ein System mit einem Stift zum Bedienen eines elektronischen Geräts und einer Aufbewahrungsvorrichtung, in die der Stift geschoben werden kann, sowie ein Verfahren zum Ausrichten eines Stifts in einer Aufbewahrungsvorrichtung für den Stift.
Elektronische Geräte, die mittels eines Stifts bedient werden können, beispielsweise über einen Sensorbildschirm, finden zunehmend Verbreitung. Bei dem elektronischen Gerät kann es sich beispielsweise um ein Mobiltelefon handeln oder um ein Notebook, also einen tragbaren Computer. Auch ein Tablet-Computer, also ein tragbarer, mittels eines Stifts bedienbarer Computer, ist denkbar. Mittels des Stifts und einem Bedienelement am elektronischen Gerät, beispielsweise ein Sensorbildschirm, kann das elektronische Gerät gesteuert werden. Beispielsweise kann ein auf dem Sensorbildschirm dargestelltes grafisches Symbol angetippt wird, um ein Programm zu starten. Der Stift kann auch als elektronisches Schreibgerät, zum Auswählen von Menüpunkten oder zum Navigieren durch die Programme verwendet werden.
Wenn der Stift nicht benötigt wird, beispielsweise wenn das elektronische Gerät nicht in Betrieb ist oder während des Transports, kann der Stift in einer Aufbewahrungsvorrichtung positioniert werden. Die Aufbewahrungsvorrichtung kann am elektronischen Gerät befestigt oder in diesem integriert sein. Eine derartige Lösung ist aus der US 7,508,383 B2 bekannt.
Aus der US 2005/0168500 A1, der US 2009/0225061 A1 und der US 2006/0094464 A1 sind elektronische Geräte mit einem Bedienstift (Stylus) bekannt.
Die US 2005/0168500 A1 offenbart ein elektronisches Gerät und einen Stylus, der in das Gerät geschoben werden kann. Neben einem ersten Körper und einem hohlen zweiten Körper hat der Stylus einen Rastmechanismus und eine Feder. Das Gerät hat eine Öffnung und eine Aussparung für den Rastmechanismus Die Form der Öffnung führt zu einer Rotation des Stiftes beim Einfügen des Rastmechanismus in die Öffnung. Der Rastmechanismus hat zwei Vorsprünge, wobei der eine Vorsprung nach unten gedrückt wird, wenn der Stylus in das Gerät geschoben wird und dann in der Aussparung des Geräts verrastet.
Die US 2009/0225061 A1 offenbart einen Stylus mit einem Hauptkörper, einem spitzenseitigen Ende und einem Positioniervorsprung. Weiter sind drei verschiedene Nutabschnitte offenbart. Der Stylus wird so in ein Gehäuse eingeschoben, dass der Positioniervorsprung in den ersten Nutabschnitt eingeführt ist. Dann wird der Positioniervorsprung so gedreht, dass dieser in den dritten Nutabschnitt gleiten kann. Anschließend greift dieser in den zweiten Nutabschnitt ein, wobei ein Federkraft den Vorsprung so hält, dass der Stylus nicht vom Gehäuse entfernt werden kann.
Die US 2006/0094464 A1 offenbart ein Mobiltelefon mit einer Antenne, die auch als Eingabestift fungiert. Der Stift hat eine Ausbauchung an einem Stiftkörper für das Ausfahren und Einfahren der Antenne. Auch ist ein Bedienelement vorgesehen für das Ausfahren und Einfahren der Antenne. Zum Einschieben der Antenne in einen Hauptkörper des Mobiltelefons besitzt das Mobiltelefon eine Öffnung, dessen Form zu einer Rotation der Antenne führt, wenn die Antenne in den Hauptkörper hineingeschoben wird. WO0072135 A1 offenbart einen elektronischen Stift, der einen drehbaren Kopf besitzt.

Eine falsche Ausrichtung des Stifts beim Hineinschieben in die Aufbewahrungsvorrichtung kann zur Beschädigung des Stifts oder der Aufbewahrungsvorrichtung führen. Dieses soll durch das erfindungsgemäße System verhindert werden. Zudem soll ein entsprechendes Verfahren zum Positionieren des Stifts in der Aufbewahrungsvorrichtung angegeben werden.

Diese Aufgabe wird durch die in den unabhängigen Patentansprüchen angegebenen Maßnahmen gelöst.

Es ist gemäß Anspruch 1 ein System mit einem Stift zum Bedienen eines elektronischen Geräts und einer Aufbewahrungsvorrichtung, in die der Stift geschoben werden kann, vorgesehen. Der Stift hat einen Vorsprung, und auf der Innenseite der Aufbewahrungsvorrichtung ist eine Struktur zum Erzwingen einer Drehbewegung des Stifts während eines Hineinschiebens des Stifts in die Aufbewahrungsvorrichtung vorgesehen, wobei der Vorsprung derart an der Struktur entlang gleitet, wenn der Stift in die Aufbewahrungsvorrichtung geschoben wird, dass der Stift beim Hineinschieben durch Zusammenwirken von Vorsprung und Struktur relativ zur Aufbewahrungsvorrichtung um eine Längsachse des Stifts rotiert und dadurch in genau eine vorgegebene Ausrichtung oder eine vorgegebene Ausrichtung aus einer Gruppe von vorgegebenen Ausrichtungen bewegt wird, dadurch gekennzeichnet, dass der Stift einen Kopf und einen Stiftkörper hat, wobei der Kopf relativ zu dem Stiftkörper um die Längsachse des Stifts rotierbar ist, so dass ein Benutzer den Kopf beim Hineinschieben des Stifts in die Aufbewahrungsvorrichtung fassen oder drücken kann, wobei beim Hineinschieben des Stifts der Stiftkörper des Stifts sich in seine vorgegebene Ausrichtung dreht, ohne dass sich der Kopf relativ zur Aufbewahrungsvorrichtung zwangsläufig dreht.

Alternativ ist gemäß Anspruch 2 ein System vorgesehen, bei dem auf der Außenseite des Stifts eine Struktur zum Erzwingen einer Drehbewegung des Stifts während eines Hineinschiebens des Stifts in die Aufbewahrungsvorrichtung vorgesehen ist, und die Innenseite der Aufbewahrungsvorrichtung einen Vorsprung hat, an dem die Struktur derart entlang gleitet, wenn der Stift in die Aufbewahrungsvorrichtung geschoben wird, sodass der Stift beim Hineinschieben durch Zusammenwirken von Vorsprung und Struktur relativ zur Aufbewahrungsvorrichtung um eine Längsachse des Stifts rotiert und dadurch in genau eine vorgegebene Ausrichtung oder eine vorgegebene Ausrichtung aus einer Gruppe von vorgegebenen Ausrichtungen bewegt wird, dadurch gekennzeichnet, dass der Stift einen Kopf und einen Stiftkörper hat, wobei der Kopf relativ zu dem Stiftkörper um die Längsachse des Stifts rotierbar ist, so dass ein Benutzer den Kopf beim Hineinschieben des Stifts in die Aufbewahrungsvorrichtung fassen oder drücken kann, wobei beim Hineinschieben des Stifts der Stiftkörper des Stifts sich in seine vorgegebene Ausrichtung dreht, ohne dass sich der Kopf relativ zur Aufbewahrungsvorrichtung zwangsläufig dreht.
Ein Verfahren zum Ausrichten eines Stifts zum Bedienen eines elektronischen Geräts in einer Aufbewahrungsvorrichtung gemäß Anspruch 7 sieht vor, dass der Stift während des Hineinschiebens in die Aufbewahrungsvorrichtung relativ zur Aufbewahrungsvorrichtung um eine Längsachse des Stifts rotiert und sich in genau eine Ausrichtung oder eine vorgegebene Ausrichtung aus einer Gruppe von vorgegebenen Ausrichtungen bewegt, indem ein Vorsprung an einer Struktur, welche zum Erzwingen der Drehbewegung des Stifts um die Längsachse des Stifts während des Hineinschiebens des Stifts in die Aufbewahrungsvorrichtung ausgebildet ist, entlang gleitet, wobei entweder die Struktur an der Innenseite der Aufbewahrungsvorrichtung und der Vorsprung an einer Außenseite des Stifts vorgesehen sind oder die Struktur auf der Außenseite des Stifts und der Vorsprung an der Innenseite der Aufbewahrungsvorrichtung vorgesehen sind, dadurch gekennzeichnet, dass der Stift einen Kopf und einen Stiftkörper hat, wobei der Kopf relativ zu dem Stiftkörper um die Längsachse des Stifts rotierbar ist, so dass ein Benutzer den Kopf beim Hineinschieben des Stifts in die Aufbewahrungsvorrichtung fassen oder drücken kann, wobei beim Hineinschieben des Stifts der Stiftkörper des Stifts sich in seine vorgegebene Ausrichtung dreht, ohne dass sich der Kopf relativ zur Aufbewahrungsvorrichtung zwangsläufig dreht.

Während der Stift entlang der Längsachse der Aufbewahrungsvorrichtung in diese hinein geschoben wird, wird der Stift in die vorgegebene Ausrichtung gedreht. Das System verhindert das Hineinschieben des Stifts mit falscher Ausrichtung, was mit Beschädigungen des Stifts oder der Aufbewahrungsvorrichtung verbunden sein könnte. Bei einem Stift mit einem nichtrotationssymmetrischen Bereich, beispielsweise Tasten, verhindert das Ausrichten des Stifts in der Aufbewahrungsvorrichtung Beschädigungen.

Die vorgegebene Ausrichtung ist die Ausrichtung des Stifts relativ zur Aufbewahrungsvorrichtung und meint, dass ein Bezugspunkt auf der Stiftoberseite, beispielsweise der Vorsprung oder ein Strukturabschnitt, in eine vorgegebene Richtung zeigt. Der Stift ist beim Hineinschieben in der vorgegebenen Ausrichtung, wenn der Bezugspunkt in die vorgegebene Richtung weist. Die Richtung ist vorteilhafterweise senkrecht oder im Wesentlichen senkrecht zur Längsachse der Aufbewahrungsrichtung. Die Längsachse des Stifts ist beim Hineinschieben parallel oder im Wesentlichen parallel zur Längsachse der Aufbewahrungsvorrichtung oder fällt mit dieser zusammen. Es sei bemerkt, dass der Stift die vorgegebene Ausrichtung während des Hineinschiebens oder am Ende des Hineinschiebens, zum Beispiel bei Erreichen einer Endposition, erreichen kann.

Die Strukturen sind Erhebungen oder hervorragende Bereiche auf der Innenseite der Aufbewahrungsvorrichtung beziehungsweise der Außenseite des Stifts, sodass der Vorsprung an beliebiger Stelle der Struktur aufsetzen und von dort aus entlang in ein die vorgegebene Ausrichtung gleiten kann. Es ist nicht erforderlich den Stift vor dem Hineinschieben auszurichten, sondern er richtet sich beim Hineinschieben durch Zusammenwirken von Vorsprung und Struktur aus.

Die vorgegebene Ausrichtung kann bei einer Struktur mit zwei Enden beispielsweise erreicht werden, wenn der Vorsprung das Strukturende ferner der Aufbewahrungsvorrichtungsöffnung erreicht. Bei einer umlaufenden Struktur ohne Anfang und Ende wird die vorgegebenen Ausrichtung, und mögliche Endposition, erreicht, wenn der Vorsprung ein, beispielsweise lokales, Extremum der Strukturkurve, beispielsweise ein Kurvental, erreicht, welches ferner der Aufbewahrungsvorrichtungsöffnung ist als das benachbarte Extremum, beispielsweise eine Kurvenspitze.

Weitere vorteilhafte Ausgestaltungen sind in den abhängigen Patentansprüchen angegeben. Gemäß der unabhängigen Ansprüche besitzt der Stift einen Kopf, der rotierbar ist, sodass ein Benutzer beim Hineinschieben den Kopf des Stifts fassen oder drücken kann, ohne diesen zu drehen, wenn der Stift sich in seine vorgegebene Ausrichtung dreht.
In einem Ausführungsbeispiel umfasst die Struktur einen ersten Bereich und eine zweiten Bereich, wobei der erste Bereich von einem Punkt im Uhrzeigersinn entlang der Innenseite der Aufbewahrungsvorrichtung relativ um die Längsachse der Aufbewahrungsvorrichtung oder der Außenseite des Stifts relativ um die Längsachse des Stifts verläuft und rampenförmig in eine Richtung abfällt und der zweite Bereich vom Punkt gegen den Uhrzeigersinn verläuft und rampenförmig in dieselbe Richtung abfällt. Der Vorsprung gleitet beim Hineinschieben des Stifts die Rampen entlang, sodass der Stift in die vorgegebene Ausrichtung gedreht wird. In einem Ausführungsbeispiel fällt ein rampenförmiger Bereich senkrecht oder nahezu senkrecht ab.
In einem Ausführungsbeispiel umfasst die Struktur einen helixförmigen Abschnitt. Dieser Abschnitt kann ein Bruchteil einer Umdrehung, eine Umdrehung oder mehr als eine Umdrehung entlang der Innenseite der Aufbewahrungsvorrichtung oder der Außenseite des Stifts umfassen. In einem Ausführungsbeispiel formen Struktur und Vorsprung ein Gewinde, was erlaubt den Stift in die vorgegebene Ausrichtung zu schrauben.

In einem Ausführungsbeispiel ist ein kerbenförmiger oder schachtförmiger Bereich der Struktur vorgesehen, in dem der Vorsprung positioniert ist, wenn der Stift in der vorgegebenen Ausrichtung ist. Wenn der Vorsprung in diesen Bereich hinein gleitet, wird weitere Rotation unterbunden. In einem Ausführungsbeispiel ist ein Fixiermittel vorgesehen, um den Stift in der vorgegebenen Ausrichtung, welche die Endposition des Stifts sein kann, zu halten. Das Fixiermittel kann den Vorsprung kraft- und/oder formschlüssig halten, beispielsweise durch Reibung oder Einrasten.
Nachfolgend wird die Erfindung unter Bezugnahme auf die Zeichnungen anhand von Ausführungsbeispielen erklärt.
Figur 1 zeigt ein Ausführungsbeispiel eines Stifts.
Figur 2 zeigt ein weiteres Ausführungsbeispiel eines Stifts.
Figur 3 zeigt ein weiteres Ausführungsbeispiel eines Stifts.
Figur 4A zeigt eine Aufsicht auf ein Ausführungsbeispiel einer Aufbewahrungsvorrichtung.
Figur 4B zeigt einen Ausschnitt einer Schnittansicht der Aufbewahrungsvorrichtung.
Figur 4C zeigt einen Ausschnitt einer Schnittansicht eines weiteren Ausführungsbeispiels.
Figuren 5 bis 9 zeigen Ausführungsbeispiele einer Struktur.
Figur 10 zeigt ein Ausführungsbeispiel eines Systems mit einem Stift und einer Aufbewahrungsvorrichtung.
Bei den Ausführungsbeispielen geben gleiche Bezugszeichen gleiche Anordnungsteile an. Zur Vermeidung von Wiederholungen erfolgt keine mehrfache Beschreibung übereinstimmender Anordnungen.

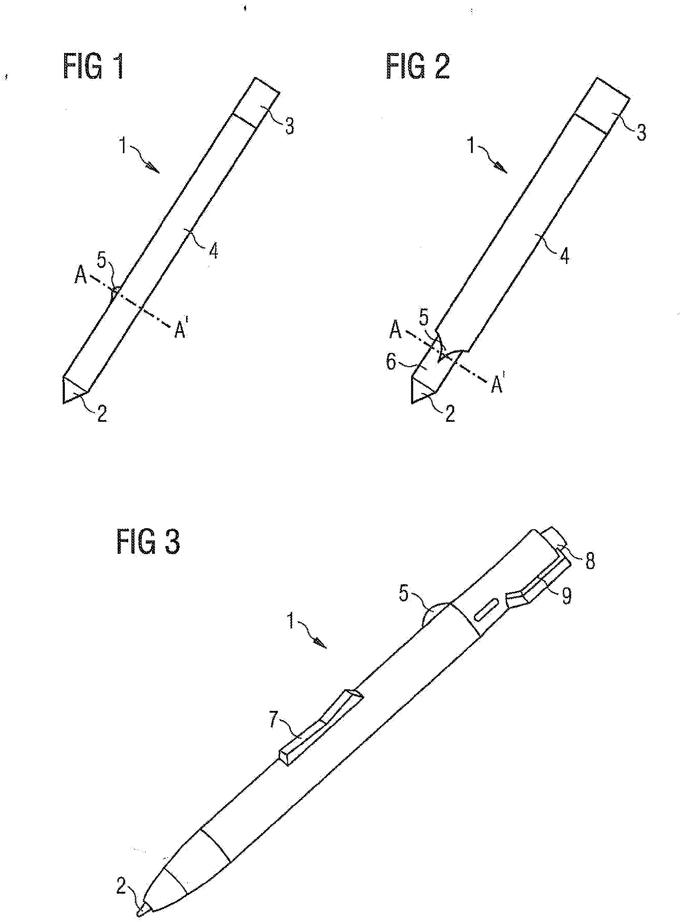

Figur 1 zeigt ein Ausführungsbeispiel eines Stifts 1. Der Stift 1 ist geeignet einen Sensorbildschirm (nicht dargestellt) eines elektronischen Geräts (nicht dargestellt) zu bedienen, beispielsweise Text einzugeben, Zeichnungen zu erstellen, Menüpunkte auszuwählen oder durch Programme zu navigieren. Dies kann erfolgen, indem der Sensorbildschirm berührt wird oder der Stift 1 in die Nähe des Sensorbildschirms gebracht wird. Bei dem elektronischen Gerät kann es sich beispielsweise um ein Videospielgerät, ein Mobiltelefon oder einen tragbaren Computer handeln. Bei einem Tablet-Computer erfolgen die Eingaben mit dem Stift 1 direkt auf dem Bildschirm, die Steuerung kann mit Tablet-Tasten erfolgen.
Der Stift 1 umfasst einen Stiftkörper 4 und einen Kopf 3. Der Sensorbildschirm wird mittels des als Spitze 2 ausgebildeten Endes des Stiftkörpers 4 berührt. In einem Ausführungsbeispiel umfasst der Stift 1 rotationssymmetrische Bereiche. Der Kopf 3 kann rotierbar hinsichtlich des Stiftkörpers 4 gelagert sein. Des Weiteren umfasst der Stift 1 einen Vorsprung 5 auf der Außenseite des Stifts 1. Der Vorsprung 5 kann spitzennah oder kopfnah oder dazwischen positioniert sein. Der Vorsprung 5 kann nasenförmig, zylinderförmig oder hügelförmig ausgestaltet sein. Bei einem Stift 1 mit einem Stiftkörper 4 mit einem im Wesentlichen kreisförmigem Querschnitt an der Linie A-A' ist der Vorsprung 5 eine Ausbuchung des ansonsten kreisförmigen Querschnitts (nicht dargestellt).

Figur 2 zeigt ein weiteres Ausführungsbeispiel eines Stifts 1. In diesem Ausführungsbeispiel hat der Stiftkörper 4 einen größeren Radius als ein spitzennaher Endbereich 6 des Stifts 1. Der Vorsprung 5 ist ein, beispielsweise spitz zulaufender, Bereich des Stiftskörpers 4, welcher sich am weitesten in Richtung der Spitze 2 erstreckt. Es sei bemerkt, dass der radial gegenüber dem Endbereich 6 hervorragende Stiftskörper 4 eine Struktur ausbildet, deren spitzennächster Bereich den Vorsprung 5 bildet. An der Stelle des Vorsprungs 5, in Figur 2 durch die Linie A-A' gekennzeichnet, hat der Stift 1 eine Ausbuchung des kreisförmigen Querschnitts (nicht dargestellt).

Der Stift 1 kann als elektronischer Stift ausgestaltet sein, der Daten an das elektronische Gerät übertragen kann. Figur 3 zeigt ein Ausführungsbeispiel eines elektronischen Stifts 1 mit einem Wippschalter 7, der beispielsweise die Funktion einer linken oder rechten Maustaste haben kann. Ferner weist dieser Stift 1 einen Radierer 8 auf, mit dem man Texte oder Elemente auf dem Sensorbildschirm löschen kann, wenn die Kopfseite des Stifts 1 den Sensorbildschirm berührt. Außerdem ist eine Öse 9 für eine Stiftschnur (nicht dargestellt) vorgesehen, welche mit dem elektronischen Gerät (nicht dargestellt) verbunden ist und verhindert, dass der Stift 1 verloren geht, beispielsweise wenn er herunterfällt.

Ein derartiger elektronischer Stift 1 kann neben der Auswahl von Menüpunkten oder dem Navigieren durch die Programme als Schreibgerät 1 dazu dienen, einen Text einzugeben, indem mit dem Stift 1 direkt auf dem Bildschirm geschrieben wird. Er kann auch als Zeichengerät verwendet werden. Durch die Radiererfunktion können Elemente auf dem Sensorbildschirm gelöscht werden, indem der Radierer 8 über das Geschriebene oder Gezeichnete bewegt wird.
Der Stift 1 wird üblicherweise in einer Aufbewahrungsvorrichtung 10, die beispielsweise als Stiftschacht ausgebildet ist, aufbewahrt und verankert. Der Stiftschacht kann in das elektronische Gerät integriert sein. In einem Ausführungsbeispiel (nicht dargestellt) ist die Öffnung des Stiftschachts an einer Seite eines Notebooks positioniert, beispielsweise an der Seite, an der auch Anschlussbuxen und/oder Steckplätze vorgesehen sind.

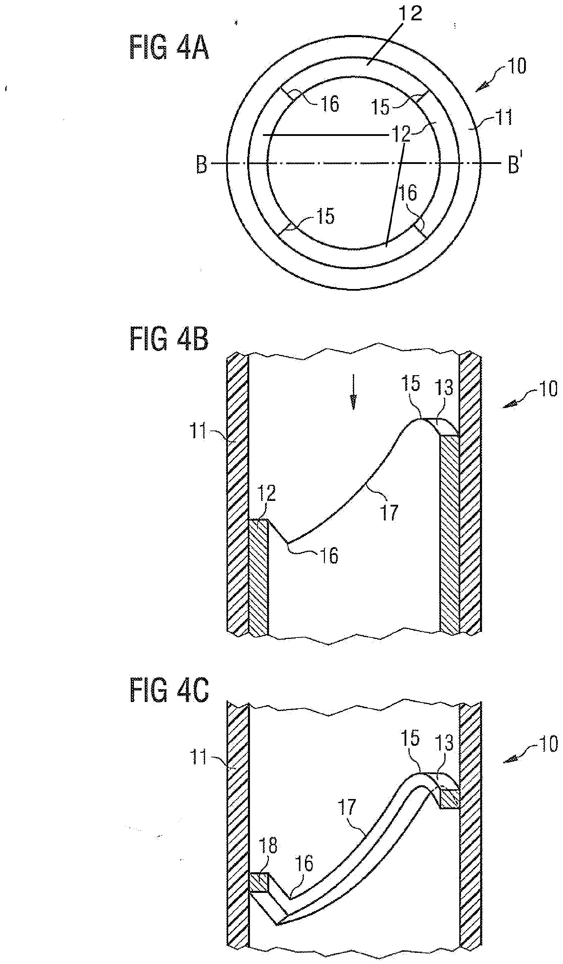

Figur 4A zeigt eine Aufsicht auf ein Ausführungsbeispiel einer schachtförmigen Aufbewahrungsvorrichtung 10. Figur 4B zeigt einen Schnitt durch die Aufbewahrungsvorrichtung 10, welche in Figur 4A dargestellt ist, entlang der Linie B-B'. Die Aufbewahrungsvorrichtung 10 ist hinsichtlich ihrer Länge derart dimensioniert, dass der Stift 1 zumindest teilweise hinein geschoben werden kann. Vorteilhafterweise wird er ganz oder nahezu ganz hinein geschoben.
In diesem Ausführungsbeispiel umfasst die Aufbewahrungsvorrichtung 10 eine äußere Hülse 11 und eine inneren Hülse 12, die miteinender verbunden sind. Die Hülsen 11, 12 sind längliche Hohlkörper mir kreisförmigen Querschnitt. Der obere Rand der äußeren Hülse 11 ist die Öffnung der Aufbewahrungsvorrichtung 10. In einem Ausführungsbeispiel ist die Aufbewahrungsvorrichtung 10 einstückig ausgebildet. Die Aufbewahrungsvorrichtung 10 ist vorteilhafterweise direkt am elektronischen Gerät angebracht oder in diesem integriert. In einem Ausführungsbeispiel (nicht dargestellt) ist die Aufbewahrungsvorrichtung 10 ein Teil des elektronischen Geräts, beispielsweise ein Teil des Gehäuses.

Der obere Rand der inneren Hülse 12 ist eine radial einwärts gerichtete Erhebung an der Innenseite der Aufbewahrungsvorrichtung 10 und bildet eine Struktur 13 auf der Innenseite der Aufbewahrungsvorrichtung 10.

In diesem Ausführungsbeispiel ist die Struktur 13 zickzackförmig an der Innenseite der Aufbewahrungsvorrichtung 10 umlaufend ausgebildet. Es sind beispielhaft zwei Spitzen 15 und zwei Täler 16 vorgesehen, zwischen denen sich rampenförmige Abschnitte 17 erstrecken. Die Spitzen 15 sind abgerundet. Es ist denkbar, die Täler 16 abzurunden.

Beim Hineinschieben eines Stifts 1 (in den Figuren 4A, 4B, 4C nicht dargestellt) in die Aufbewahrungsvorrichtung 10 wird der Stift 1 mit der Spitze 2 voran in Längsrichtung, die durch den Pfeil in Figur 4B angedeutet ist, bewegt bis der Vorsprung 5 die Struktur 13 berührt. Es sei bemerkt, dass der Stift 1 nicht ausgerichtet wird, sodass der Vorsprung 5 die Struktur 13 an einer beliebigen Stelle berühren kann.

Sobald der Vorsprung 5 die Struktur 13 berührt, wird bei weiterer Bewegung des Stifts 1 in Längsrichtung eine Drehbewegung um eine Längsachse erzwungen, da der Vorsprung 5 an der Struktur 13 entlang gleitet. Die Bewegung des Stifts 1 in Längsrichtung wird gestoppt, wenn der Vorsprung 5 das Tal 16 erreicht.

Wenn der Vorsprung 5 einen der rampenförmigen Abschnitte 17 berührt, wird er in Richtung des nächsten Tales 16 geführt. Wenn der Vorsprung 5 die Spitze 15 berührt, wird er entweder in die eine oder andere Richtung in eines der Täler 16 geführt. Bei zwei Tälern 16 kann der Stift 1 eine von zwei vorgegebenen Ausrichtungen und Endpositionen einnehmen. Die Endposition nimmt der Stift 1 nach dem Hineinschieben ein.

Figur 4C zeigt einen Schnittbereich durch ein weiteres Ausführungsbeispiel, das ebenfalls die in Figur 4A dargestellte Aufsicht hat. Es unterscheidet sich von dem in Figur 4B dargestellten Ausführungsbeispiel dadurch, dass die Struktur 13 durch einen umlaufenden Steg 18 an der Innenseite der Aufbewahrungsvorrichtung 10 gebildet wird. Der Steg 18 verläuft wie die Oberkante der inneren Hülse 12 in Figur 4B. Der Steg 18 hat in diesem Fall einen rechteckförmigen Querschnitt. Andere Formen sind denkbar.

In einem alternativen Ausführungsbeispiel (nicht dargestellt) ist die Struktur 13 nicht umlaufend ausgebildet, sondern im Bereich des Tals 16 unterbrochen. Die Längsbewegung des Stifts 1 kann durch andere Mittel, beispielsweise das Auftreffen der Stiftspitze 2 auf dem Boden der Aufbewahrungsvorrichtung 10, gestoppt werden. Auch bei einem derartigen Ausführungsbeispiel wird der Stift 1 in eine vorgegeben Ausrichtung geführt, sobald der Vorsprung 5 das Strukturende bei der Unterbrechung erreicht.

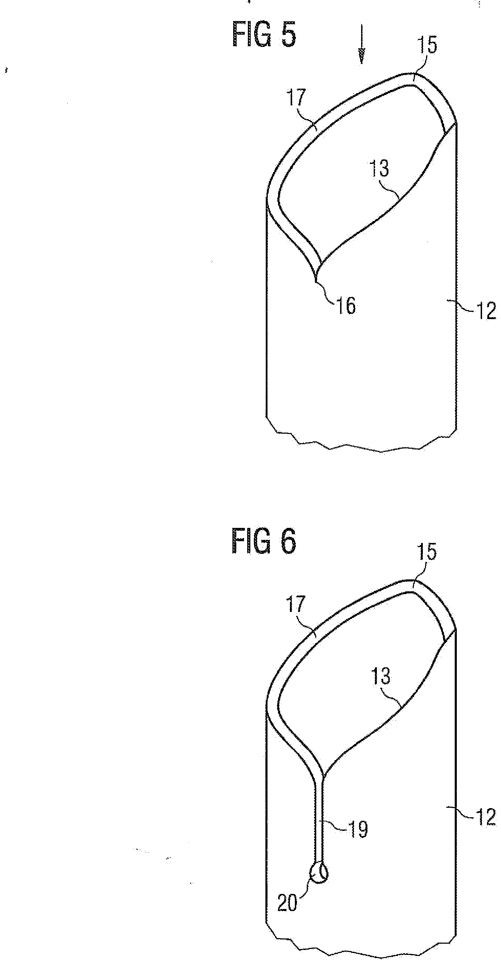

Figur 5 zeigt ein weiteres Ausführungsbeispiel einer Struktur 13. Der Übersichtlichkeit halber ist in dieser Zeichnung lediglich die innere Hülse 12 der Aufbewahrungsvorrichtung 10 dargestellt. Es sei bemerkt, dass eine derartige Struktur 13 auch durch einen Steg 18 ausgebildet werden kann. In diesem Ausführungsbeispiel kann der Stift 1 in genau eine vorgegebene Ausrichtung geführt werden. Die Struktur 13 hat lediglich eine Spitze 15, die abgerundet ist, und ein Tal 16 zwischen denen sich rampenförmige Strukturbereiche 17 erstrecken. Einer verläuft entgegen dem Uhrzeigersinn entlang der Innenseite der Aufbewahrungsvorrichtung 10 in die Richtung, in der der Stift 1 eingeführt wird, abfallend. Der andere verläuft im Uhrzeigersinn entlang der Innenseite der Aufbewahrungsvorrichtung 10 in die Richtung, in der der Stift 1 eingeführt wird, abfallend.

Beim Hineinschieben des Stifts 1 in die Aufbewahrungsvorrichtung 10 kann der Stift 1 in Längsrichtung, die durch den Pfeil angedeutet ist, bewegt werden bis der Vorsprung 5 die Struktur 13 berührt. Sobald der Vorsprung 5 die Struktur 13 berührt, wird bei weiterer Bewegung des Stifts 1 in Längsrichtung eine Drehbewegung erzwungen, da der Vorsprung 5 an der Struktur 13 entlang gleitet. Die Bewegung des Stifts 1 in Längsrichtung wird gestoppt, wenn der Vorsprung 5 das Tal 16 erreicht. Das Tal 16 ist keilförmig ausgebildet, sodass eine Rotationsbewegung des Stifts 1 vermieden wird, sobald der Vorsprung 5, der vorteilhafterweise an die Form des Tals 16 angepasst ist, das Tal 16 erreicht hat.

Figur 6 zeigt ein weiteres Ausführungsbeispiel der Struktur 13. Auch in diesem Fall ist der Übersichtlichkeit halber lediglich die innere Hülse 12 dargestellt. Es sei bemerkt, dass eine derartige Struktur 13 auch durch einen Steg 18 ausgebildet werden kann. Dieses Ausführungsbeispiel unterscheidet sich von dem in Figur 5 dargestellten Ausführungsbeispiel dadurch, dass das Tal 16 schachtförmig ausgebildet ist. In diesem Beispiel gleitet der Vorsprung 5 zunächst an dem rampenförmigen Abschnitt 17 entlang und dann den Schacht 19 entlang. Der Stift 1 erreicht die vorgegebene Ausrichtung, wenn der Vorsprung 5 am Anfang des Schachts 19 ist. Die Ausrichtung wird beibehalten, wenn der Vorsprung den Schacht 19 hinab gleitet. Des Weiteren ist in diesem Ausführungsbeispiel ein Fixiermittel 20 vorgesehen, mit dem der Stift 1 in der Endposition fixiert wird. In diesem Ausführungsbeispiel weitet sich der Schacht 19 am unteren Ende auf, sodass der Vorsprung 5 sich verkantet und der Stift 1 vor zufälligem Herausrutschen bewahrt wird. Alternative Ausführungen des Fixiermittels 20, das den Stift 1 mittels Kraft- und/oder Formschluss fixiert, sind denkbar.

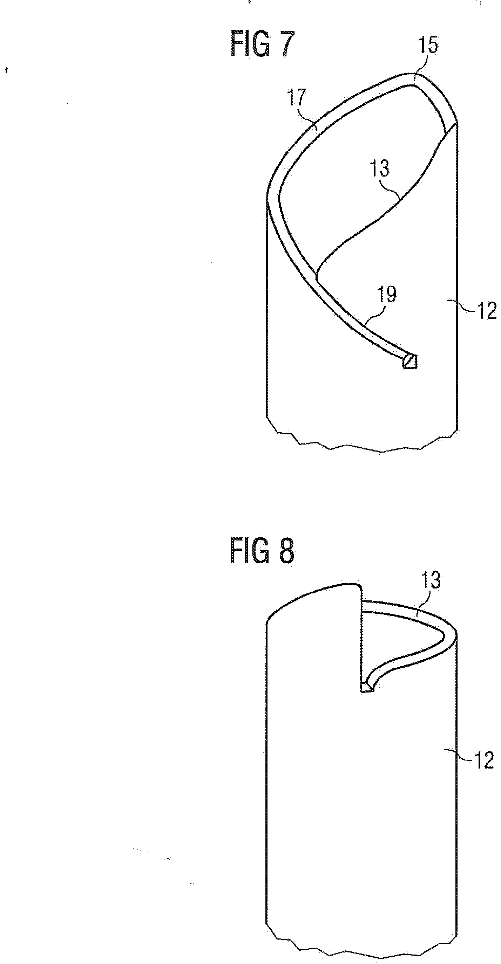

Figur 7 zeigt ein weiteres Ausführungsbeispiel der Struktur 13. Auch in diesem Fall ist lediglich die innere Hülse 12 dargestellt. Es sei bemerkt, dass eine derartige Struktur 13 auch durch einen Steg 18 ausgebildet werden kann. Dieses Ausführungsbeispiel unterscheidet sich von dem vorhergehenden dadurch, dass der Schacht 19 nicht senkrecht, sondern schräg verläuft. Es handelt sich hierbei um einen helixförmigen Abschnitt, sodass der Stift 1, wenn sein Vorsprung 5 die Struktur 13 entlang gleitet, weiter rotiert, bis er das Schachtende erreicht hat. In diesem Fall verhindert der helixförmige Schacht 19 das Herausfallen des Stifts 1, da zum Herausziehen des Stifts 1 eine Drehbewegung erforderlich ist. Wenn der Vorsprung 5 entlang des gegen den Uhrzeigersinn verlaufenden Abschnitts 17 gleitet, wird der ohne Änderung der Drehrichtung ans Schachtende geführt. Wenn er den anderen Rampenabschnitt 17 berührt, erfolgt eine Änderung der Drehrichtung auf dem Weg zum Schachtende.
Figur 8 zeigt ein weiteres Ausführungsbeispiel der Struktur 13. Auch in diesem Fall ist lediglich die innere Hülse 12 dargestellt. Es sei bemerkt, dass eine derartige Struktur 13 auch durch einen Steg 18 ausgebildet werden kann. In diesem Ausführungsbeispiel ist die Struktur 13 helixförmig ausgebildet. Sie windet sich entlang der Innenseite der Aufbewahrungsvorrichtung 10 in Längsrichtung abfallend. Der Vorsprung 5 gleitend in der vorgegebenen Drehrichtung bis ans Ende der Helix. In diesem Ausführungsbeispiel macht die Helix einen Umlauf entlang der Innenseite der Aufbewahrungsvorrichtung 10. Es sind aber auch kürzere Helixabschnitte, die keinen vollständigen Umlauf machen, oder längere Abschnitte, die mehr als einen Umlauf machen, möglich. In einem Ausführungsbeispiel (nicht dargestellt) ist am Ende der Helix ein senkrecht abfallender Schacht vorgesehen.

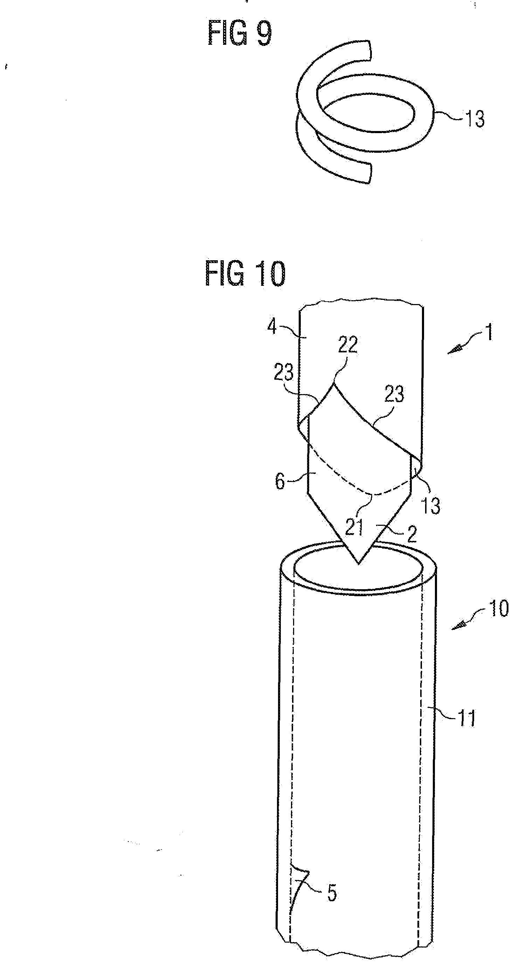

Figur 9 zeigt ein Ausführungsbeispiel einer stegförmigen Struktur 13, die helixförmig ist. Der Übersichtlichkeit halber wurde auf die Darstellung der Hülse 12, an deren Innenseite die Struktur 13 verläuft, verzichtet. Diese Struktur 13 läuft 540 Grad entlang der Innenseite der Aufbewahrungsvorrichtung 10 und weist keinen Stopp am Strukturende, das ferner der Aufbewahrungsvorrichtungsöffnung ist, für den Vorsprung 5 auf. Bei diesem Ausführungsbeispiel bilden der Vorsprung 5 (nicht dargestellt in Figur 9) und Struktur 13 ein Gewinde. Der Stift 1 wird in eine vorgegeben Ausrichtung gedreht. Nach Durchlauf des Vorsprungs 5 durch die Struktur 13 ist eine weitere Längsbewegung des ausgerichteten Stifts 1 möglich. Die Ausrichtung kann bei weiterer Längsbewegung beibehalten werden, beispielsweise durch eine geeignete Führung. Beispielsweise kann der in Figur 3 gezeigte Stift 1 nach Durchlauf seines Vorsprungs 5 durch die Struktur 13 derart ausgerichtet sein, dass bei weiterem Hineinschieben die Öse 9 in eine dafür vorgesehene Aussparung (nicht dargestellt) gleitet, sodass eine weitere Rotationsbewegung des Stifts 1 vermieden wird.
Figur 10 zeigt ein weiteres Ausführungsbeispiel eines Systems mit einem Stift 1 und einer Aufbewahrungsvorrichtung 10. In diesem Ausführungsbeispiel hat der Stift 1 eine Struktur 13, welche auf der Außenseite des Stifts 1 ist. In diesem Fall hat die Struktur 13 einen spitzennächsten Punkt 21 und einen spitzenfernsten Punkt 22, zwischen denen sich rampenförmige Bereiche 23 erstrecken. Der Stiftkörper 4 hat einen größeren Radius als der Endbereich 6 des Stifts 1, wobei die hervorspringende Kante des Stiftkörpers 4 die Struktur 13 bildet.
Die Aufbewahrungsvorrichtung 10 umfasst eine Hülse 11, an deren Innenseite ein Vorsprung 5 vorgesehen ist. Wenn der Stift 1 in die Aufbewahrungsvorrichtung 10 geschoben wird, berührt der Vorsprung 5 die Struktur 13 und diese gleitet an dem Vorsprung 5 entlang, wenn der Stift 1 weiter in Längsrichtung bewegt wird. Dadurch wird der Stift 1 in eine Rotationsbewegung versetzt, bis der Vorsprung 5 den spitzenfernsten Punkt 22 erreicht hat. Dann hat der Stift 1 seine vorgegebene Ausrichtung und Endposition erreicht. Es sei bemerkt, dass natürlich auch die Struktur, welche auf dem Stift 1 aufgebracht ist, Merkmale aufweisen kann, wie sie in den Figuren 4A bis 9 dargestellt oder in der obigen Beschreibung erwähnt worden sind.
Es ist denkbar, dass der Vorsprung 5 der öffnungsnächste Punkt einer an der Innenseite der Aufbewahrungsvorrichtung 10 umlaufenden Struktur 13 ist (in Figur 10 nicht dargestellt), welche derart geformt ist, dass die Struktur 13 des Stifts 1 und die der Aufbewahrungsvorrichtung 10 ineinander passen, wenn der Stift 1 seine vorgegebene Position erreicht hat. Der Kopf 3 des Stifts 1, wie in Figur 2 dargestellt, ist rotierbar gegenüber dem Stiftkörper 4. Dadurch ist es möglich, wenn der Benutzer den Stift 1 lediglich am Kopf 3 berührt, beispielsweise indem er mit der Fingerspitze auf den Kopf 3 drückt und damit den Stift 1 hinein schiebt, sobald dessen Spitze 2 in die Aufbewahrungsvorrichtung 10 eingeführt worden ist, dass der Stiftkörper 4 sich beim Hineinschieben in die vorgegeben Ausrichtung dreht, ohne dass der Kopf 3 sich relativ zur Aufbewahrungsvorrichtung 10 dreht. Dieses erleichtert das Hineinschieben des Stifts 1.
Es sei bemerkt, dass die in den Ausführungsbeispielen dargestellten Merkmale kombinierbar sind.

### Bezugszeichenliste

- 1: Stift
- 2: Spitze
- 3: Kopf
- 4: Stiftkörper
- 5: Vorsprung
- 6: Endbereich
- 7: Wippschalter
- 8: Radierer
- 9: Öse
- 10: Aufbewahrungsvorrichtung
- 11: äußere Hülse
- 12: innere Hülse
- 13: Struktur
- 15: Spitze
- 16: Tal
- 17, 23: Rampe
- 18: Steg
- 19: Schacht
- 20: Fixiermittel
- 21: spitzennächster Punkt
- 22: spitzenfernster Punkt

## Patentansprüche

1. System mit einem Stift (1) zum Bedienen eines elektronischen Geräts und einer Aufbewahrungsvorrichtung (10), in die der Stift (1) geschoben werden kann, wobei der Stift (1) einen Vorsprung (5) hat, und an der Innenseite der Aufbewahrungsvorrichtung (10) eine Struktur (13) zum Erzwingen einer Drehbewegung des Stifts (1) während eines Hineinschiebens des Stifts (1) in die Aufbewahrungsvorrichtung (10) vorgesehen ist, wobei der Vorsprung (5) an der Struktur (13) derart entlang gleitet, wenn der Stift (1) in die Aufbewahrungsvorrichtung (10) geschoben wird, dass der Stift (1) beim Hineinschieben durch Zusammenwirken von dem Vorsprung (5) und der Struktur (13) relativ zur Aufbewahrungsvorrichtung (10) um eine Längsachse des Stifts (1) rotiert und dadurch in genau eine vorgegebene Ausrichtung oder eine vorgegebene Ausrichtung aus einer Gruppe von möglichen vorgegebenen Ausrichtungen bewegt wird,
**dadurch gekennzeichnet, dass** der Stift (1) einen Kopf (3) und einen Stiftkörper (4) hat, wobei der Kopf (3) relativ zu dem Stiftkörper (4) um die Längsachse des Stifts (1) rotierbar ist, so dass ein Benutzer den Kopf (3) beim Hineinschieben des Stifts (1) in die Aufbewahrungsvorrichtung (10) fassen oder drücken kann, wobei beim Hineinschieben des Stifts (1) in die Aufbewahrungsvorrichtung (10) der Stiftkörper (4) des Stifts (1) sich in seine vorgegebene Ausrichtung dreht, ohne dass sich der Kopf (3) relativ zur Aufbewahrungsvorrichtung (10) zwangsläufig dreht.

2. System mit einem Stift (1) zum Bedienen eines elektronischen Geräts und einer Aufbewahrungsvorrichtung (10), in die der Stift (1) geschoben werden kann, wobei auf der Außenseite des Stifts (1) eine Struktur (13) zum Erzwingen einer Drehbewegung des Stifts (1) während eines Hineinschiebens des Stifts (1) in die Aufbewahrungsvorrichtung (10) vorgesehen ist, und die Innenseite der Aufbewahrungsvorrichtung (10) einen Vorsprung (5) hat, an dem die Struktur (13) derart entlang gleitet, wenn der Stift (1) in die Aufbewahrungsvorrichtung (10) geschoben wird, dass der Stift (1) beim Hineinschieben durch Zusammenwirken von dem Vorsprung (5) und der Struktur (13) relativ zur Aufbewahrungsvorrichtung (10) um eine Längsachse des Stifts (1) rotiert und dadurch in genau eine vorgegebene Ausrichtung oder eine vorgegebene Ausrichtung aus einer Gruppe von möglichen vorgegebenen Ausrichtungen bewegt wird,
**dadurch gekennzeichnet, dass** der Stift (1) einen Kopf (3) und einen Stiftkörper (4) hat, wobei der Kopf (3) relativ zu dem Stiftkörper (4) um die Längsachse des Stifts (1) rotierbar ist, so dass ein Benutzer den Kopf (3) beim Hineinschieben des Stifts (1) in die Aufbewahrungsvorrichtung (10) fassen oder drücken kann, wobei beim Hineinschieben des Stifts (1) in die Aufbewahrungsvorrichtung (10) der Stiftkörper (4) des Stifts (1) sich in seine vorgegebene Ausrichtung dreht, ohne dass sich der Kopf (3) relativ zur Aufbewahrungsvorrichtung (10) zwangsläufig dreht.

3. System nach einem der Ansprüche 1 bis 2, **dadurch gekennzeichnet, dass** die Struktur (13) einen ersten Bereich und eine zweiten Bereich umfasst, wobei der erste Bereich von einem Punkt im Uhrzeigersinn entlang der Innenseite der Aufbewahrungsvorrichtung (10) relativ um die Längsachse der Aufbewahrungsvorrichtung (10) oder der Außenseite des Stifts (1) relativ um die Längsachse des Stifts (1) verläuft und rampenförmig in eine Richtung abfällt und der zweite Bereich vom Punkt gegen den Uhrzeigersinn relativ um die Längsachse des Stifts (1) verläuft und rampenförmig in dieselbe Richtung abfällt.

4. System nach einem der Ansprüche 1 bis 3, **dadurch gekennzeichnet, dass** die Struktur (13) einen helixförmigen Abschnitt umfasst.

5. System nach einem der Ansprüche 1 bis 4, **gekennzeichnet durch** einen kerbenförmigen oder schachtförmigen Bereich (16, 22, 19) der Struktur (13), in dem der Vorsprung (5) positioniert ist, wenn der Stift (1) die vorgegebene Ausrichtung hat.

6. System nach einem der Anspruch 1 bis 5, **gekennzeichnet durch** ein Fixiermittel (20), das geeignet ist den Stift (1) in der vorgegebenen Ausrichtung zu halten.

7. Verfahren zum Ausrichten eines Stifts (1), der zum Bedienen eines elektronischen Geräts vorgesehen ist, in einer Aufbewahrungsvorrichtung (10), wobei der Stift (1) während eines Hineinschiebens in die Aufbewahrungsvorrichtung (10) relativ zur Aufbewahrungsvorrichtung (10) um eine Längsachse des Stifts (1) rotiert und sich dadurch in genau eine vorgegebene Ausrichtung oder eine vorgegebene Ausrichtung aus einer Gruppe von möglichen vorgegebenen Ausrichtungen bewegt, indem ein Vorsprung (5) an einer Struktur (13), welche zum Erzwingen der Drehbewegung des Stifts (1) um die Längsachse des Stifts (1) während des Hineinschiebens des Stifts (1) in die Aufbewahrungsvorrichtung (10) ausgebildet ist, entlang gleitet, wobei entweder die Struktur (13) an der Innenseite der Aufbewahrungsvorrichtung (10) und der Vorsprung (5) an einer Außenseite des Stifts (1) vorgesehen sind oder die Struktur (13) auf der Außenseite des Stifts (1) und der Vorsprung (5) an der Innenseite der Aufbewahrungsvorrichtung (10) vorgesehen sind,
**dadurch gekennzeichnet, dass** der Stift (1) einen Kopf (3) und einen Stiftkörper (4) hat, wobei der Kopf (3) relativ zu dem Stiftkörper (4) um die Längsachse des Stifts (1) rotierbar ist, so dass ein Benutzer den Kopf (3) beim Hineinschieben des Stifts (1) in die Aufbewahrungsvorrichtung (10) fassen oder drücken kann, wobei beim Hineinschieben des Stifts (1) in die Aufbewahrungsvorrichtung (10) der Stiftkörper (4) des Stifts (1) sich in seine vorgegebene Ausrichtung dreht, ohne dass sich der Kopf (3) relativ zur Aufbewahrungsvorrichtung (10) zwangsläufig dreht.

## Claims

1. System having a stylus (1) for operating an electronic device and a storage device (10), in which the stylus (1) can be inserted, wherein the stylus (1) has a protrusion (5), and a structure (13) for forcing a rotary movement of the stylus (1) during an insertion of the stylus (1) into the storage device (10) is provided on the interior side of the storage device (10), wherein the protrusion (5) slides along the structure (13) in such a way that, when the stylus (1) is inserted into the storage device (10), upon insertion, the stylus (1) rotates about a longitudinal axis of the stylus (1) relative to the storage device (10) due to an interaction of the protrusion (5) and the structure (13), and is thereby moved into exactly one predetermined orientation or a predetermined orientation among a group of possible predetermined orientations,
**characterized in that** the stylus (1) has a head (3) and a stylus body (4), wherein the head (3) is rotatable relative to the stylus body (4) about the longitudinal axis of the stylus (1), such that a user can grip or press the head (3) when inserting the stylus (1) into the storage device (10), wherein, while inserting the stylus (1) into the storage device (10), the stylus body (4) of the stylus (4) rotates into its predetermined orientation, without the head (3) necessarily rotating relative to the storage device (10).

2. System with a stylus (1) for operating an electronic device and a storage device (10), into which the stylus (1) can be inserted, wherein a structure (13) for forcing a rotary movement of the stylus (1) during an insertion of the stylus (1) into the storage device (10) is provided on the outer side of the stylus (1), and the interior side of the storage device (10) has a protrusion (5), on which the structure (13) slides along in such a way that, when the stylus (1) is inserted into the storage device (10), the stylus (1) rotates relative to the storage device (10) about a longitudinal axis of the stylus (1) due to the interaction of the protrusion (5) and the structure (13) during the insertion, and is thereby moved into exactly one predetermined orientation or into a predetermined orientation among a group of possible predetermined orientations,
**characterized in that** the stylus (1) has a head (3) an a stylus body (4), wherein the stylus (3) is rotatable relative to the stylus body (4) about the longitudinal axis of the stylus (1), such that a user can grip or press the head (3) when inserting the stylus (1) into the storage device (10), wherein, while inserting the stylus (1) into the storage device (10), the stylus body (4) of the stylus (1) rotates into its predetermined orientation without the head (3) necessarily rotating relative to the storage device (10).

3. The system according to one of claims 1 to 2,
**characterized in that** the structure (13) includes a first region and a second region, wherein the first region extends clockwise from a point along the interior side of the storage device (10) relative about the longitudinal axis of the storage device (10) or the outer side of the stylus (1) relative about the longitudinal axis of the stylus (1) and declines in a ramp shape in one direction and that the second region extends counter-clockwise from the point relative about the longitudinal axis of the stylus (1) and declines in a ramp shape in the same direction.

4. The system according to one of claims 1 to 3,
**characterized in that** the structure (13) includes a helical portion.

5. The system according to one of claims 1 to 4,
**characterized by** a notch-shaped or shaft-shaped region (16, 22, 19) of the structure (13), in which the protrusion (5) is positioned when the stylus (1) has the predetermined orientation.

6. The system according to one of claims 1 to 5,
**characterized by** a fixation means (20) which is suitable to retain the stylus (1) in the predetermined orientation.

7. A method for orienting a stylus (1), which is provided for operating an electronic device, in a storage device (10), wherein, during an insertion into the storage device (10), the stylus (1) rotates relative to the storage device (10) about a longitudinal axis of the stylus (1) and thereby moves into exactly one predetermined orientation or a predetermined orientation among a group of possible predetermined orientations in that a protrusion (5) slides along a structure (13) for forcing the rotary movement of the stylus (1) about the longitudinal axis of the stylus (1) during insertion of the stylus (1) into the storage device (10), wherein either the structure (13) is provided on the interior side of the storage device (10) and the protrusion (5) is provided on an outer side of the stylus (1), or the structure (13) is provided on the outer side of the stylus (1) and the protrusion (5) is provided on the interior side of the storage device (10),
**characterized in that** the stylus (1) has a head (3) and a stylus body (4), wherein the head (3) is rotatable relative to the stylus body (4) about the longitudinal axis of the stylus (1), such that a user can grip or press the head (3) when inserting the stylus (1) into the storage device (10), wherein upon insertion of the stylus (1) into the storage device (10), the stylus body (4) of the stylus (1) rotates into its predetermined orientation, without the head (3) necessarily rotating relative to the storage device (10).

## Revendications

1. Système comprenant un stylet (1) pour commander un appareil électronique et un dispositif de rangement (10) dans lequel le stylet (1) peut être inséré, ledit stylet (1) étant doté d'une saillie (5) et une structure (13) étant prévue sur le côté intérieur du dispositif de rangement (10) pour forcer une mouvement de rotation du stylet (1) pendant une insertion du stylet (1) dans le dispositif de rangement (10), la saillie (5) glissant le long de la structure (13) de sorte que lorsque le stylet (1) est inséré dans le dispositif de rangement (10), le stylet (1) tourne pendant l'insertion sous l'effet de l'interaction de la saillie (5) et de la structure (13) par rapport au dispositif de rangement (10) autour d'un axe longitudinal du stylet (1) et est ainsi déplacé dans exactement une orientation prédéterminée ou dans une orientation prédéterminée d'un ensemble d'orientations prédéterminées possibles, **caractérisé en ce que** le stylet (1) est doté d'une tête (3) et d'un corps de stylet (4), ladite tête (3) pouvant tourner par rapport au corps de stylet (4) autour de l'axe longitudinal du stylet (1) de sorte qu'un utilisateur peut saisir ou presser la tête (3) lors de l'insertion du stylet (1) dans le dispositif de rangement (10), le corps (4) du stylet (1) tournant lors de l'insertion du stylet (1) dans le dispositif de rangement (10) dans son orientation prédéterminée, sans que la tête (3) tourne nécessairement par rapport au dispositif de rangement (10) .

2. Système comprenant un stylet (1) pour commander un appareil électronique et un dispositif de rangement (10) dans lequel le stylet (1) peut être inséré, une structure (13) étant prévue sur le côté extérieur du stylet (1) pour forcer un mouvement de rotation du stylet (1) pendant une insertion du stylet (1) dans le dispositif de rangement (10) et le côté intérieur du dispositif de rangement (10) étant doté d'une saillie (5) le long de laquelle la structure (13) glisse de sorte que lorsque le stylet (1) est poussé dans le dispositif de rangement (10), le stylet (1) tourne pendant l'insertion sous l'effet de l'interaction de la saillie (5) et de la structure (13) par rapport au dispositif de rangement (10) autour d'un axe longitudinal du stylet (1) et est ainsi déplacé dans exactement une orientation prédéterminée ou dans une orientation prédéterminée d'un ensemble d'orientations prédéterminées possibles, **caractérisé en ce que** le stylet (1) est doté d'une tête (3) et d'un corps (4), ladite tête (3) pouvant tourner par rapport au corps (4) autour de l'axe longitudinal du stylet (1) de sorte qu'un utilisateur peut saisir ou presser la tête (3) lors de l'insertion du stylet (1) dans le dispositif de rangement (10), le corps (4) du stylet (1) tournant lors de l'insertion du stylet (1) dans le dispositif de rangement (10) dans son orientation prédéterminée, sans que la tête (3) tourne nécessairement par rapport au dispositif de rangement.

3. Système selon l'une quelconque des revendications 1 à 2, **caractérisé en ce que** la structure (13) comprend une première zone et une deuxième zone, la première zone s'étendant depuis un point dans le sens horaire le long du côté intérieur du dispositif de rangement (10) par rapport à l'axe longitudinal du dispositif de rangement (10) ou le long du côté extérieur du stylet (1) par rapport à l'axe longitudinal du stylet (1) et descendant en forme de rampe dans une direction et la deuxième zone s'étendant depuis le point dans le sens anti-horaire par rapport à l'axe longitudinal du stylet (1) et descendant en forme de rampe dans la même direction.

4. Système selon l'une quelconque des revendications 1 à 3, **caractérisé en ce que** la structure (13) comprend une section hélicoïdale.

5. Système selon l'une quelconque des revendications 1 à 4, **caractérisé par** une section en forme d'encoche ou de gaine (16, 22, 19) de la structure (13), dans laquelle la saillie (5) est positionnée lorsque le stylet (1) se trouve dans l'orientation prédéterminée.

6. Système selon l'une quelconque des revendications 1 à 5, **caractérisé par** un moyen de fixation (20) qui est approprié pour maintenir le stylet (1) dans l'orientation prédéterminée.

7. Procédé pour orienter un stylet (1), qui est prévu pour commander un appareil électronique, dans un dispositif de rangement (10), le stylet (1) tournant pendant une insertion dans le dispositif de rangement (10) par rapport au dispositif de rangement (10) autour d'un axe longitudinal du stylet (1) et se déplaçant ainsi exactement dans une orientation prédéterminée ou dans une orientation prédéterminée d'un ensemble d'orientations prédéterminées, de sorte qu'une saillie (5) glisse le long d'une structure (13), laquelle est conçue pour forcer le mouvement de rotation du stylet (1) autour de l'axe longitudinal du stylet (1) pendant l'insertion du stylet (1) dans le dispositif de rangement (10), soit ladite structure (13) étant prévue sur le côté intérieur du dispositif de rangement (10) et la saillie (5) sur un côté extérieur du stylet (1), soit la structure (13) étant prévue sur le côté extérieur du stylet (1) et la saillie (5) sur le côté intérieur du dispositif de rangement (10), **caractérisé en ce que** le stylet (1) est doté d'une tête (3) et d'un corps de stylet (4), ladite tête (3) pouvant tourner par rapport au corps de stylet(4) autour de l'axe longitudinal du stylet (1) de sorte qu'un utilisateur peut saisir ou presser la tête (3) lors de l'insertion du stylet (1) dans le dispositif de rangement (10), le corps de stylet (4) du stylet (1) tournant lors de l'insertion du stylet (1) dans le dispositif de rangement (10) dans son orientation prédéterminée, sans que la tête (3) tourne nécessairement par rapport au dispositif de rangement (10) .
